Europäisches Patentamt

European Patent Office

Office européen des brevets

(19)

(11) Publication number: **0 012 264**
**B1**

(12) **EUROPEAN PATENT SPECIFICATION**

(45) Date of publication of patent specification: **02.12.81**

(21) Application number: **79104721.0**

(22) Date of filing: **27.11.79**

(51) Int. Cl.³: **G 11 B 5/09,** G 11 B 5/02, G 11 B 5/28

(54) **Data transducing apparatus.**

(30) Priority: **18.12.78 US 970713**

(43) Date of publication of application:
**25.06.80 Bulletin 80/13**

(45) Publication of the grant of the European patent:
**02.12.81 Bulletin 81/48**

(84) Designated Contracting States:
**DE FR GB**

(56) References cited:
**US - A - 3 336 595**
**US - A - 3 763 383**
**US - A - 4 015 290**

(73) Proprietor: **International Business Machines Corporation**
**Armonk, N.Y. 10504 (US)**

(72) Inventor: **Lewkowicz, Julian**
**8032 E. Presidio**
**Tucson, Arizona 85715 (US)**
Inventor: **Schwarz, Theodore Albert**
**20220 Marilla Court**
**Saratoga, California (US)**

(74) Representative: **Hobbs, Francis John**
**IBM United Kingdom Patent Operations Hursley Park**
**Winchester Hants, SO21 2JN (GB)**

Courier Press, Leamington Spa, England.

## Data transducing appartus

This invention relates to transducing apparatus for recording digital information.

It is well-known in the prior art to use a magnetic transducer to record and/or reproduce data in the form of magnetic transitions from a magnetic recording medium positioned in proximity to the transducer.

The magnetic transducer is generally of the inductive type, which is fabricated from a first method in which a coil is wound around one leg of a yoke of magnetic material having a gap which interacts with the medium, or from a second method using thin film technology wherein a planar coil is deposited on a magnetic substrate and closed with a magnetic pole piece. A third method, using thin film technology uses a magnetoresistive film between magnetic substrates to reproduce a signal from the field emanating from a magnetic media. Transducers of the third method require an excitation current to sense the signal. Transducers derived from the first and second methods are called $d\emptyset/dt$ transducers.

In the prior art, a transducer whether of the $d\emptyset/dt$ type or of the M-R type, may be a single-track head or a multi-track head. With the single-track head, at any instant of time, only one track of data is recorded on or reproduced from the media. In contrast, with the multi-track head, a multiplicity of data tracks are recorded or reproduced simultaneously by the head during a particular time interval.

One characteristic of all recording transducers, be it single-track or multi-track, is that bidirectional energization current sometimes called "write current" must be supplied to the head. The direction of current flow depends on the character of the data to be recorded. For example, if the data is a logical "1", then the energization current flows in the opposite direction to the current for the immediately preceding data. Likewise if the data is a logical "0", then the energization current flows in the same direction as the first direction.

The data is usually recorded in one of the prior art recording formats; for example, Non-Return-To-Zero (NRZ) and Return-To-Zero, sometimes called pulse code recording. Although the present invention is useful with either of the enumerated recording formats, it is particularly useful with the pulse code recording format.

In order to effect the writing of data on the media, the recording transducer must be driven by a write driver, sometimes called a "write amplifier." A tri-state driver is necessary for driving a transducer recording data in the Return-To-Zero format. A bi-state driver is needed for energizing a transducer recording data in the NRZ format.

Various methods and configurations of drivers are used in the prior art for driving transducers. In U.S. Patent Specification 3,336,595, a coil of a recording head is coupled across the collector terminals of a pair of transistors configured in a conventional flip-flop circuit. A trigger circuitry is provided for energizing the transistor so that current will flow through the recording coil bidirectionally. This U.S. Specification also discloses a system whereby the driver circuit is used to drive a plurality of magnetic heads located on different magnetic tape drives on a time shared basis. Head selection is done under the control of a host computer with a circuit switching the selected head across the drive circuit. It is also known from the US-A-4,015,290 to connect a data head and a time head by means of switching circuits in a series energizing circuit between the battery terminals to permit a continuous DC current to flow over the first and second heads, the switching circuits determining also the direction of current flow according the information to be recorded.

One of the problems of prior art multi-track head systems arises from the multiplicity of electrical leads needed to connect the elements of the head with the driving circuits. As is well-known to those skilled in the art, a multi-track head includes a plurality of inductive elements arranged on a supporting substrate. In order to supply the writing current to the elements, a plurality of conductors is needed to interconnect the driver circuit and the inductive elements. This configuration dictates that a relatively large space is needed to run the interconnecting conductors. The alternative solution is to fabricate the magnetic head with fewer inductive elements. Of course, neither of these solutions is acceptable.

Another problem is that of "feed through." As is well-known to those skilled in the art, whenever a multiplicity of inductive elements is packaged within a relatively small area, each element radiates. The radiation results in electromagnetic interference or "feed through" between the elements.

The invention seeks to provide a data transducing apparatus which overcomes the aforementioned problems.

The invention provides data transducing apparatus comprising a transducing head having a plurality of transducing elements connected in series and driver means for selectively energising the transducing elements characterised in that: the driver means comprises a plurality of parallel circuit paths connected between a voltage source and a constant current source, each of the parallel circuit paths comprising first and second switching means connected in series via a circuit node; that each transducing element is connected between an individual pair of the aforementioned circuit nodes; and that control means are provided for selectively operating the switching means so that current can be caused to flow in either direction through a selected transducing element or a selected group of adjacent transducing elements.

The invention will now be described by way of example, with reference to the accompanying drawings, in which:—

FIGURES 1 and 2 represent, in simple block diagram form, magnetic data transducing apparatus according to the invention;

FIGURE 3 shows a specific embodiment of the invention;

FIGURE 4 represents another embodiment of the invention;

FIGURE 5 shows a tri-state digital pulse wave form;

FIGURE 6 shows a grouping of data suitable for use with the embodiment shown in FIGURE 4;

FIGURE 7 depicts combinatorial logic suitable to select a specific element in the multielement head of FIGURE 4; and

FIGURES 8 and 9 are schematic representations of a multi-track magnetic transducer suitable to record data on a multi-density media.

Although the invention finds use with other types of recording e.g., NRZ, it is particularly suitable for use with a pulse code type of recording.

The term "conterminous", as is used herein, means a multi-track magnetic transducer wherein the elements are interconnected at common boundaries.

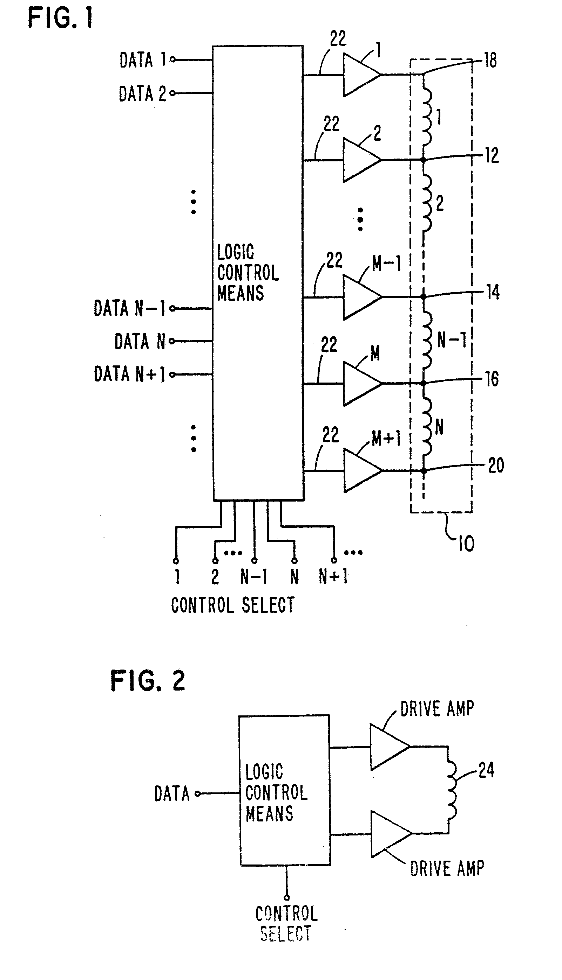

Referring now to FIGURES 1 and 2, a multi-track magnetic transducer 10 includes a plurality of conterminous write elements N. The broken or phantom line between the second and N-1 write elements indicates that additional elements may be added. Also, the broken line following the last element indicates that additional elements may be added. The elements are configured so that intermediate nodes 12, 14 and 16 are common to at least two head elements; while end nodes 18 and 20 are associated with only one head element, respectively. Of course, if the multi-track transducer 10 is extended to incorporate additional elements at nodes 18 and 20, then those nodes would now be intermediate nodes with the stated characteristics. The nodes are interconnected to a plurality of drive amplifiers 1 through M+1. As will be explained subsequently, the drive amplifiers supply the bi-directional drive current which is needed in the elements for writing data in the form of magnetic transitions on a recording media (not shown). The drivers may be grouped as intermediate amplifiers (such as amplifiers 2 through M) and end amplifiers, (amplifier 1 and M+1). With this configuration, each of the intermediate amplifiers drives a plurality of head elements. This means that each of the intermediate amplifiers is shared by at least a pair of write elements interconnected to one of the common nodes. The end amplifiers each drive a single element. As a result of this configuration, a multi-track magnetic transducer with N elements requires M+1 drive amplifiers where M is equal to N.

A logic control means is interconnected to the amplifiers via conductors 22. The function of the logic control means is to decide which of the elements will be driven at any instant of time and the direction in which current will flow. The input to the logic control means is a plurality of data lines (1 thru N+1) upon which the data to be written on the medium (not shown) is conveyed and a plurality of controlled select lines (1 thru N+1). The logic control means uses the data lines and the controlled select lines to determine which of the driver amplifiers to activate so as to drive a desired element or elements of the multi-track magnetic transducer. A plurality of devices may be used for the logic control means, for example, a microprocessor, a read only storage (ROS), or combinatorial logic.

When the recording is done in the pulse code mode, at each node, the driver amplifier is operated in one of three states:

State 1: The driver amplifier is OFF
State 2: The driver amplifier is ON
State 3: The driver amplifier is ON

Of course, if the driver is used to drive an element using a Non-Return-To-Zero mode of recording, then at each node only two states of the amplifier need to be used. With the tri-state driver in "State 1", the impedance of the driver is effectively infinite ($Z \simeq \infty$). With the driver in "State 2" the impedance is approximately zero ($Z \simeq 0$). This implies that the driving is done by a voltage source. Likewise, in the third state with the driver ON, the impedance is approximately infinity ($Z \simeq \infty$). This condition implies a current sink.

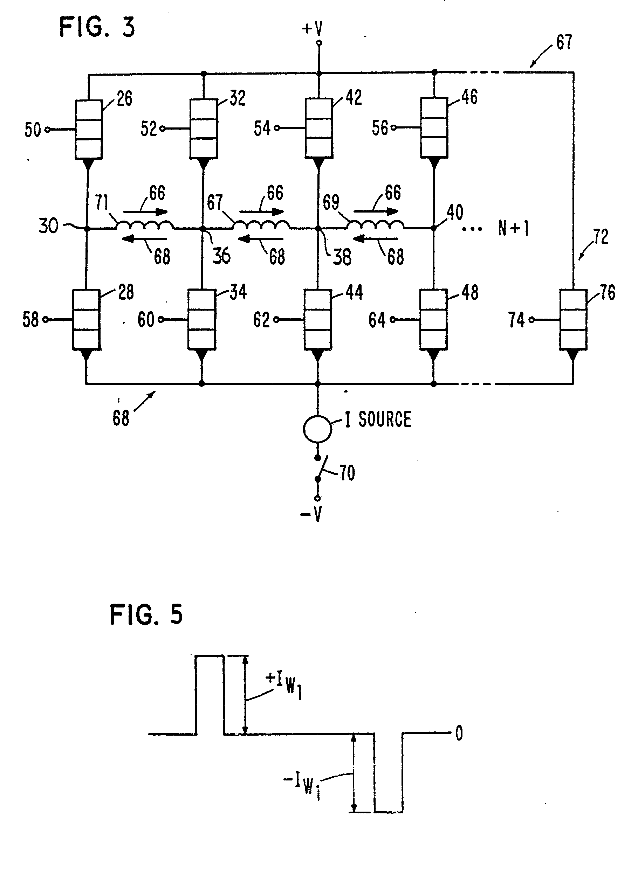

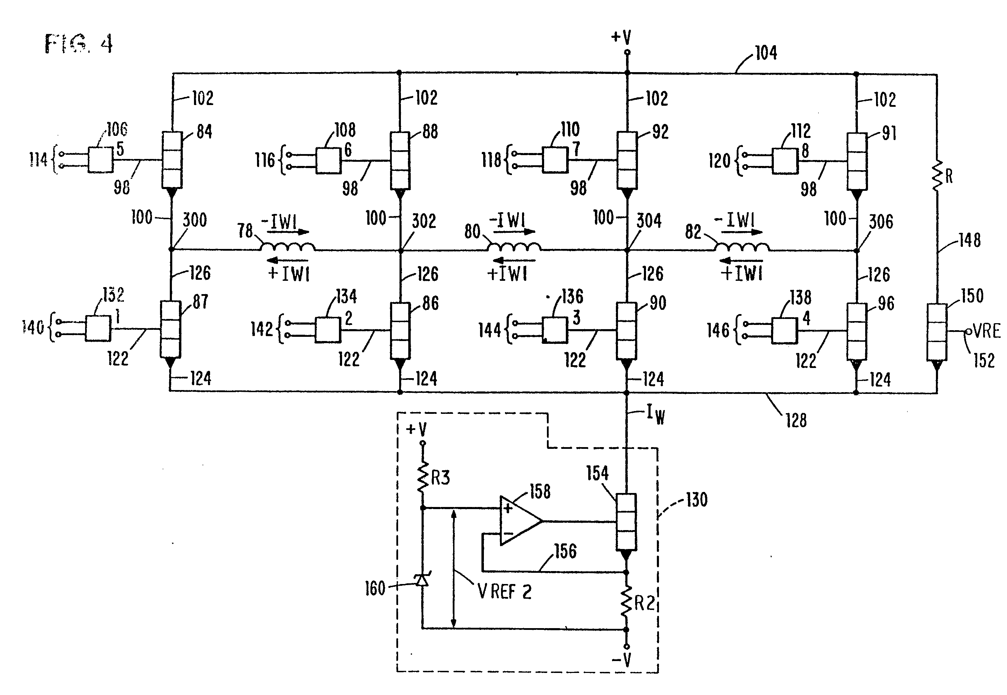

Feedthrough between the elements of a multi-track head is best controlled when only one of a successive pair of nodes (FIGURE 3) is activated. This suggests that sequential drivers must be activated alternately. Likewise, when a drive amplifier is active (voltage source) the opposite node of the pair must be in the On state (current sink).

FIGURE 2 depicts a configuration where write element 24 of a single track magnetic transducer is driven by drive amplifiers. The logic control means accepts data signals on the data line and control signals on the control select line. The logic utilizes the received information for driving write element 24 by means of the drive amplifiers.

A specific embodiment (FIGURE 3) of the invention, includes a pair of switching transistors 26 and 28, interconnected at a node 30 to form one leg of a bridge circuit. The other leg of the bridge circuit is formed by a pair of switching transistors 32 and 34, respectively. Like the first pair of switching transistors, switching transistors 32 and 34 are interconnected to a common node 36. A series of nodes 38, 40 on down to the N+1 node is formed in like manner as node 30 and node 36 respectively. Of course, the number of nodes is dictated by the number of write elements in the multi-track head. Switching transistors 42 and 44 are connected to node 38 while switching transistors 46 and 48 are connected to node 40. A plurality of independent controlled terminals 50, 52, 54, 56, 58, 60, 62 and 64 are connected to the switching transistors. Each of the switching transistors under the control of its independent controlled terminal is turned on to conduct current so that current flows bidirectionally in the directions shown by arrows 66 and 68 respectively so that each of the switching transistors writes digital data. A common voltage buss 67 is interconnected to a voltage reference source and supplies a reference voltage to one set of the switching transistors. A constant current source (I Source) is connected to a common current buss 68 which supplies current to the other switching transistors. The constant current source is connected via control means 70 to a second voltage reference source (−V). As will be explained subsequently, by activating the control means 70 and at least a pair of controlled terminals 50 to 64, current transmission through any of the write elements of the head is achieved.

Still referring to FIGURE 3, a shunt path 72 interconnects the voltage buss and the current buss. The shunt path provides an alternative route for steering current independent of the write elements of the multi-track head. The shunt path incorporates a switching transistor 76 with a controlled terminal 74.

Although only three write elements (67, 69, 71) for the multi-track head are shown, additional write elements and associated pairs of switching transistors may be added as indicated by the dotted lines in FIGURE 3.

Although the above described embodiment is concerned with a multi-track head the invention can also be applied to a drive amplifier for a single track head. In the single track situation, only one coil, for example, the coil 71 is needed with common nodes 30 and 36 and the drive amplifier would comprise only switching transistors 26, 28, 32 and 34. For the single track application, the multi-track configuration can be used. The use of a multi-track head to perform the single track application is called backward compatibility. As will be described subsequently, a multi-track head can be driven so as to achieve backward compatability.

A specific embodiment of a drive amplifier system for a multi-track magnetic transducer is represented in FIGURE 4. The transducer includes recording coils 78, 80 and 82 respectively. The coils are driven by drive amplifiers 84, 86, 87 and 88; 86, 88, 90 and 92; and 90, 91, 92 and 96 so that write current −IW1 and +IW1 flows bidirectionally in the coils. In the configuration of FIGURE 4 only one of the recording coils is rendered active at any particular instant of time. This tends to reduce the feedthrough of magnetic interference between the coils. Each of the drive amplifiers are identical and, therefore, only one pair of amplifiers which forms the first "H" configuration will be described. Drive amplifiers 84, 86 and 88, 87 include a switched voltage source (SVS) 84 connected at a common node 300 and a switched current source (SCS) 86 connected to a common node 302. Likewise, SVS 88 is connected to a common node 302 while SCS 87 is connected to common node 300. With this configuration, SVS 84 and SCS 87 are connected to common node 300, and SVS 88 and SCS 86 are connected to common node 302. Similarly, SVS 92 and SVS 91 are connected at common nodes 304 and 306 to SCS 90 and SCS 96, respectively. Each of the switched voltage sources comprises a transistor having a base lead 98, an emitter lead 100 and a collector lead 102. The emitter leads of the switched voltage sources are connected to common nodes 300, 302, 304 and 306, respectively, while the collector leads 102 are tied to a common voltage buss 104 connected to a positive reference source (+V) of approximately +5 volts. The base leads 98 of the switched voltage sources are tied to independently controlled circuit means 106, 108, 110 and 112, respectively. A plurality of control terminals 114, 116, 118 and 120 transmit external control signals from, for example, a computer, a microprocessor or the controller of a magnetic tape recording unit to the control circuit means.

Still referring to FIGURE 4, as with the SVS (84, 88, 91 and 92) the SCS (87, 86, 90 and 96) comprises a plurality of transistors, each of which includes a base lead 122, an emitter lead 124 and a collector lead 126. The emitter leads of the SCS are tied to a common current buss 128. Current to the current buss is supplied from constant current source 130. The bases 122 of the SCS are connected to independent control circuit means 132, 134, 136 and 138 respectively. Controlled terminals 140, 142, 144 and 146 supply control signals to the control circuit means. A shunt path, 148, interconnects the voltage buss to the current buss. The shunt path shunts current away from the recording coils when the head is not in use. As will be explained subsequently, the shunt path allows current to be constantly diverted from the supply source so as to minimize the switching transient which results in noise. The shunt path includes a biasing resistor R connected to the collector terminal of a transistor 150. The emitter of the transistor 150 is tied to the current buss 128. A controlled terminal 152 interconnects the base of transistor 150 to a reference potential VRE. The shunt path is called a "current Dump" path. VRE is set such that transistor 150 conducts only when all the control signals on the base leads 122 are at their minimum level.

Still referring to FIGURE 4, the constant current source 130 comprises a transistor 154 having its emitter tied through a biasing resistor R2 to a source of negative reference potential (—V). A conductor 156 interconnects the emitter of the transistor 154 to one of the input terminals of a bipolar operational amplifier 158. The output of the bipolar operational amplifier 158 is connected to the base of the transistor 154. In addition to biasing the transistor 154, biasing resistor R2 establishes a reference voltage which is impressed across a constant voltage generating means, for example, Zener diode 160. The output of the Zener diode is tied to the other input terminal of operational amplifier 158 and to a positive reference voltage supply (+V) through resistor R3.

Only one of the recording coils is conducting at any given instant of time. Current flows in the direction —IW1 or +IW1 where —IW1 equals +IW1 equals IW. Likewise, IW equals VREF2 divided by R2. This means that at any instant of time the current flowing in one of the recording coils is independent of the path resistance. Thus, the current IW is solely dictated by the constant current source 130. This further means that the quantum of current in each element, when in its conductive state is substantially identical and, therefore, isolates each element from the common current buss and common voltage buss. During conduction of a coil, the SVS is substantially a floating switch while the SCS is a high impedance current switch.

Referring now to FIGURE 5 a digital pulse waveform is shown. This digital waveform is a replica of the current waveform presented at one of the nodes in FIGURE 5. For example, at one instant of time the current at the selected node is positive (+IW1). At another instant of time, the current is zero. During the interval of time when the current is zero, the shunt path 148 conducts current from the voltage buss to the current buss and so bypasses the recording coils. Likewise, at another instant of time the current at the selected node is minus (—IW1). As such, at each node is a tri-state driver driving current through the coil.

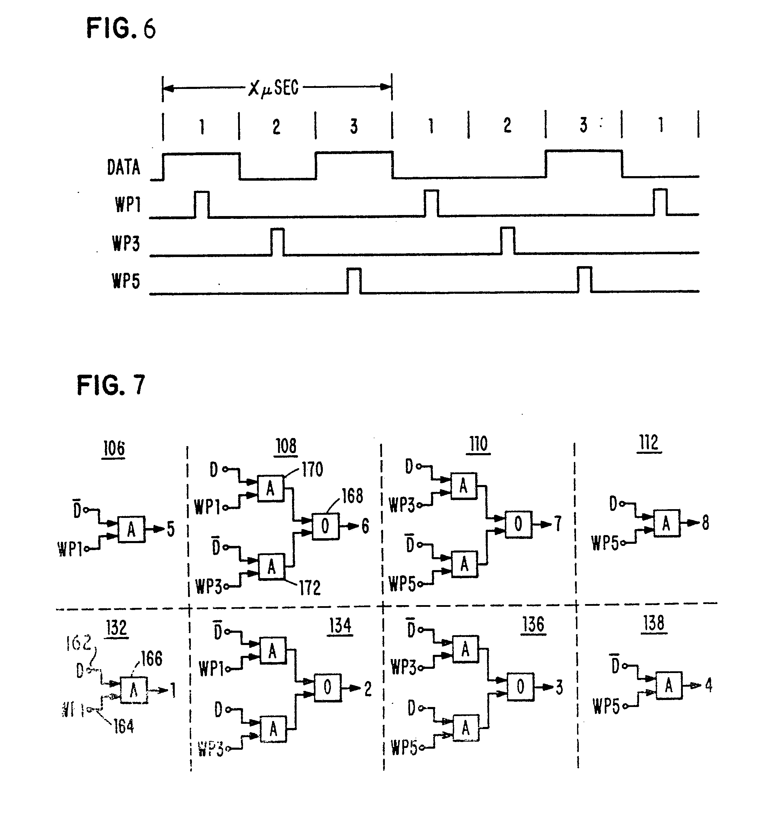

As was stated previously, in order to energize the selected coil of the multi-coil head, adjacent SVS (such as 84 and 88) cannot be activated simultaneously. For proper operation, opposite SCS and SVS of a selected drive amplifier must be energized simultaneously. For example, SVS 92 and SCS 86 must be energized to generate a +IW1. Likewise SVS 88 and SCS 90 must be energized to obtain a —IW1. The data to be written on the media must be grouped to achieve this desired result. It should be noted that a plurality of ways may be devised for grouping the data. The grouping, therefore, which will be described hereinafter with reference to FIGURE 6 is only illustrative.

As was described above, in order for the driver to work satisfactorily, consecutive pair of nodes (such as 300, 302 and 302, 304) cannot be energised simultaneously. Also, only one SVS and its associated opposite SCS, of each adjoining pair of SVS and SCS are on simultaneously. This dictates that the data which is to be written on the media has to be grouped in a specific way to fulfil this requirement. There are a plurality of ways, all of which lie within the skill of the prior art for grouping data so as to achieve the desired result. FIGURE 6 illustrates one of the methods.

Returning to FIGURE 4 for the moment, it was previously stated that control signals, possibly from a computer or from the controller unit of a tape transport, are supplied to controlled terminals 114, 116, ... 140 and 142. These control signals cause control circuit means 106, 108, ... 132 134 ... to generate signals which turn on pairs of SVS and SCS such as 92 and 86 respectively. For example, the control signals at any of the controlled terminals, such as 114, 116 . . . 140 and 142 ... comprise a data pulse and a write pulse identified as WP1, WP3 and WP5.

In FIGURE 6, the grouping is such that the data period is $X \mu$ sec. Within that $X \mu$ sec three control pulses, WP1, WP3 and WP5 are available. The write pulse, together with the data pulse, is used by control circuit means 106, 108 ... 132 and 134 ... The grouping in FIGURE 6 shows an arrangement for a three track head. However, should there be more than three coils in a multi-track head then the data for another group of coils could be multiplexed over another data line and another group of write pulses such as WP2, WP4 and WP6 be the controlling pulses for gating the data for the other group of coils. Of course, the control circuits which receive the data pulses and the write pulses and turn on the appropriate SVS and SCS may be packaged in the same module or on a separate module.

Referring now to FIGURE 7, a table with a set of combinatorial logic for control circuit means 132, 106, 108, 134, 110, 136, 112 and 138 is shown. Again, this should only be regarded as exemplary, since a plurality of other means (such as selection matrix, micro processor, read only storage and the PLA) and other types of combinatorial logic may be used for generating the signal for activating the appropriate SVS and SCS of FIGURE 4. It is worthwhile noting that the input to the circuits of FIGURE 7 are the control signals shown in FIGURE 6 in proper time relationship. Also, the outputs 1 through 8 from the circuits in FIGURE 7 are fed to the base terminals 98 and 122, of the transistors in FIGURE 4. Since FIGURE 7 is self explanatory, it will suffice to say that the combinatorial logic groupings 106, 108, 110, 112, 132, 134, 136 and 138 in FIGURE 7 are the detail for the control circuit means having those reference numbers in block diagram form in FIGURE 4.

However, one will be described to show how the device works. Suppose, for example, one desired to turn on SVS 88 and SCS 87 so that write current plus (+IW1) flows in coil 78. Then it becomes necessary to activate output 6 of control circuit means 108 and output 1 of control circuit means 132. To activate output 1, two control pulses D and WP1 respectively are supplied to inputs 162 and 164 of a two input logical "AND" circuit 166. Likewise, to generate a signal at output 6 of control circuit means 108, a two input "OR" circuit 168 is connected to the outputs of a pair of two inputs AND circuits 170 and 172 respectively. The input control signals to AND circuit 170 are pulse D and pulse WP1, while the input to AND circuit 172 is $\overline{D}$ and WP3. Likewise, using well known circuit minimization techniques, if need be, the circuit can be minimized to reduce the amount of circuit needed for controlling the SVS and SCS in FIGURE 4.

Similarly, by activating outputs 5 and 2, 7 and 4, 6 and 3, 8 and 3 the associated SVS and SCS will activate a selected coil.

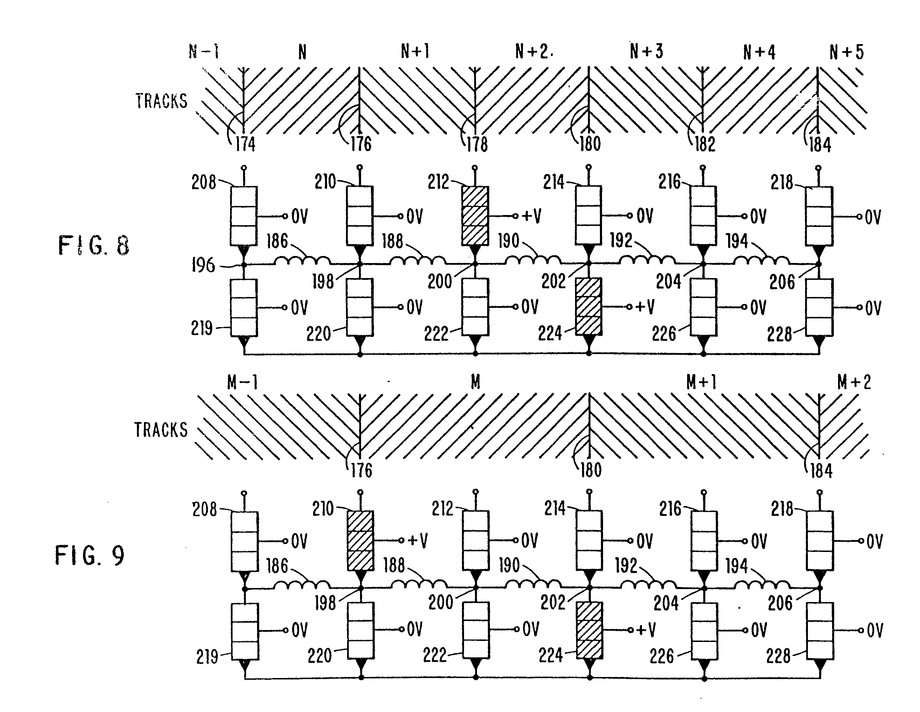

Referring now to FIGURES 8 and 9, the backward compatibility aspect of a multi-track head system according to the invention is shown. As was defined, backward compatibility means that a given head and set of electronics records tapes at more than one track density. In the upper part of FIGURE 8, a length of media having a high density configuration is shown. A plurality of data tracks N−1 through track N+5 are separated by boundaries 174, 176, 178, 180, 182 and 184 respectively. Each of the data tracks is written by associated coils 186, 188, 190, 192 and 194, shown in the lower part of FIGURE 8. Coil 186 is connected between nodes 196 and 198. Likewise, coils 188, 190, 192 and 194 are connected between nodes 198 and 200, 200 and 202, 202 and 204, and 204 and 206 respectively. Each of the nodes is tied to a switch voltage source (SVS) 208 through 218 and a switch current source (SCS) 219 through 228. Each of the switch voltage sources and the switch current sources may be emitter coupled transistors with zero volts (OV) on the base terminal of a transistor which is desired not to be activated and a plus V (+V) on the base of a transistor which is activated. With this format, if it is required to write data in track N+2 by passing write current from node 200 to node 202 through coil 190 then transistors 212 and 224 are activated, while all the other transistors are deactivated. The other transition on track N+2 is written by deactivating transistors 212 and 224 by impressing zero volts (not shown) on their base terminals and activating transistors 214 and 222 respectively. Any other track or group of tracks in the multi-track head can be activated in a similar manner.

FIGURE 9 represents a low density operation. The structure of the multi-track head represented by coils 186, 188, 190, 192 and 194 in the lower part of FIGURE 9 is the same as that in FIGURE 8. However, the track M is wider. In fact, tracks N+1 and N+2 are subelements of track M. Also, boundaries 176 and 180 are identical in both FIGURES 8 and 9. In order to write track M, switch voltage source 210 and switch current source 224 is activated. Current flows from node 198 through node 200 to node 202. Also, current reversal is achieved by activating transistors 214 and 220 respectively. Thus, it is possible to use the same multi-track head and electronics to record data at multiple density assuring backward and forward compatibility.

The above described invention affords a user the following advantages:

(a) More drivers or amplifiers can be packaged in a module which is used to drive a magnetic transducer.

(b) As a result of the shared terminal driver concept, fewer leads are needed between a drive module and the magnetic transducer.

(c) The drive modules dissipate relatively low energy.

(d) The current drain on the power supply is constant; hence there are no current transients which adversely affect recording.

(e) The logic which controls the drive amplifiers is simple.

**Claims**

1. Data transducing apparatus comprising a transducing head having a plurality of transducing elements connected in series and driver means for selectively energising the transducing elements characterised in that: the driver means comprises a plurality of parallel circuit paths connected between a voltage source and a constant current source, each of the parallel circuit paths comprising first and second switching means connected in series via a circuit node; that each transducing element is connected between an individual pair of the aforementioned circuit nodes; and that control means are provided for selectively operating the switching means so that current can be caused to flow in either direction through a selected transducing element or a selected group of adjacent transducing elements.

2. Data transducing apparatus as claimed in claim 1, characterised in that the driver means includes an additional circuit path connected between the voltage source and current source, the additional circuit path comprising a switching device and being such that when the switching device is operated, the additional circuit path shunts current away from the transducing elements.

3. Data transducing apparatus as claimed in claim 1 or claim 2, characterised in that the control means is responsive to both a set of pulses indicative of data to be recorded and to a set of control pulses.

4. Data transducing apparatus as claimed in claim 3, characterised in that the control means comprises a plurality of control devices each operably associated with an individual one of the first and second switching means.

5. Data transducing apparatus as claimed in any preceding claim, in which the transducing head is a multi-track magnetic recording head.

**Revendications**

1. Dispositif de transduction de données comportant une tête de transduction comprenant plusieurs éléments de transduction montés en série et des moyens d'excitation permettant d'exciter de façon sélective lesdits éléments de transduction, caractérisé en ce que: les moyens d'excitation comprennent plusieurs circuits montés en parallèle entre une source de tension et une source de courant constant et dont chacun comprend un premier et un second moyens de commutation montés en série par l'intermédiaire d'un noeud de circuit; en ce que chauque élément de transduction est monté entre une paire desdits noeuds de circuit; et en ce que de moyens de commande permettent de commander de façon sélective les moyens de commutation de telle sorte que le courant puisse circuler dans un sens ou dans l'autre en traversant un élément de transduction choisi ou un groupe choisi d'éléments de transduction adjacents.

2. Dispositif de transduction de données selon la revendication 1, caractérisé en ce que les moyens d'excitation comprennent un circuit supplémentaire monté entre la source de tension et la source de courant, ledit circuit supplémentaire comprenant un dispositif de commutation et étant tel que, lorsque ce dispositif de commutation est mis en service, le circuit supplémentaire shunte le courant destiné aux éléments de transduction.

3. Dispositif de transduction de données selon la revendication 1 ou 2, caractérisé en ce que les moyens de commande répondent à la fois à un ensemble d'impulsions représentatives des donnnées à enregistrer et à un ensemble d'impulsions de commande.

4. Dispositif de transduction de données selon la revendication 3, caractérisé en ce que les moyens de commande comprennent plusieurs dispositifs de commande dont chacun est associé à l'un ou à l'autre des premier et second dispositifs de commutation.

5. Dispositif de transduction de données selon l'une quelconque des revendications précédentes, caractérisé en ce que la tête de transduction est une tête d'enregistrement magnétique multipistes.

**Patentansprüche**

1. Datenwandler mit einem Wandlerkopf, der eine Mehrzahl von in Reihe geschalteten Wandlerelementen aufweist, und mit einer Treiberschaltung zum selektiven Speisen der Wandlerelemente, dadurch gekennzeichnet, daß die Treiberschaltung eine Reihe paralleler Schaltungspfade enthält, die zwischen einer Spannungsquelle und einer Konstantstromquelle angeschlossen sind, wobei jede der parallen Schaltungspfade eine erste und eine zweite Schaltvorrichtung enthält, die über einen Schaltungsknoten in Reihe geschaltet sind, daß jedes Wandlerelement zwischen ein individuelles Paar der vorher erwähnten Schaltungsknoten angeschlossen ist und daß Steuervorrichtungen vorgesehen sind zum selektiven Betätigen der Schaltvorrichtung, so daß Strom in beiden Richtungen durch ein ausgewähltes Wandlerelement oder eine ausgewählte Gruppe benachbarter Wandlerelemente fließen kann.

2. Datenwandler nach Anspruch 1, dadurch gekennzeichnet, daß die Treibervorrichtung einen zusätzlichen Schaltungspfad einschließt, der zwischen der Spannungsquelle und der Stromquelle angeschlossen ist und eine Schalteinrichtung enthält und von der Art ist, daß, wenn die Schalteinrichtung betätigt wird, der zusätzliche Schaltungspfad den Strom von den Wandlerelementen fernhält.

3. Wandler nach den Ansprüchen 1 oder 2, dadurch gekennzeichnet, daß die Steuervorrichtung sowohl auf einen Satz von Impulsen anspricht, die aufzuzeichnende Daten anzeigen, als auch auf einen Satz von Steuerimpulsen.

4. Datenwandler nach Anspruch 3, dadurch gekennzeichnet, daß die Steuervorrichtung eine Reihe von Steuereinrichtung enthält, von denen jede einer einzelnen der ersten und zweiten Schaltvorrichtungen zugeordnet ist.

5. Wandler nach einem der vorhergehenden Ansprüche, dadurch gekennzeichnet, daß der Wandlerkopf ein vielspuriger magnetischer Aufzeichnungskopf ist.

FIG. 1

DATA 1

DATA 2

⋮

LOGIC
CONTROL
MEANS

DATA N−1

DATA N

DATA N+1

⋮

CONTROL SELECT

1   2   ⋯   N−1   N   N+1   ⋯

22   1   18

22   2   1   12

⋮   2

22   M−1   14

22   M   N−1   16

22   M+1   N   20

10

FIG. 2

DATA

LOGIC
CONTROL
MEANS

DRIVE AMP

24

DRIVE AMP

CONTROL
SELECT

1

FIG. 3

FIG. 5

FIG. 4

# FIG. 6

# FIG. 7

FIG. 8

FIG. 9